# EUROPÄISCHE PATENTANMELDUNG

(11) **EP 3 796 723 A1**
(43) Veröffentlichungstag der Anmeldung: **24.03.2021**
(21) Anmeldenummer: 19197777.6
(22) Anmeldetag: 17.09.2019
(51) Int. Cl.: H04W 56/00

(54) **VERFAHREN UND VORRICHTUNG ZUR EINFACHEN ZEITSYNCHRONISATION EINER KOMMUNIKATION IM INDUSTRIELLEN UMFELD**

(71) Anmelder: Siemens Aktiengesellschaft, 80333 München (DE)
(72) Erfinder: Sinn, Ulrich, 91056 Erlangen (DE)

(57) **Zusammenfassung**

Für drahtlose Kommunikation im industriellen Umfeld gibt es unter anderem ein iWLAN Protokoll, welches den Anforderungen entspricht, aber keine Zeitsynchronisation bei der Datenübertragung anbietet.

Erfindungsgemäß wird für die Synchronisation ein zusätzlicher - idealerweise drahtloser - Kanal genutzt. Dafür kommt in einer vorteilhaften Ausgestaltung der Erfindung ein einfaches Funksystem zum Einsatz.

Impulse oder Telegramme zur Zeitsynchronisierung werden direkt von einer als Hardware ausgeführte Einheit, die für die Zeitsynchronisation zuständig ist und über eine hochgenaue Uhr verfügt, initiiert bzw. auf der zu synchronisierenden Seite einer solchen zugeführt. Das Funksystem kann sehr einfach und unidirektional ausgeführt sein. Der Sendevorgang wird ohne Verzögerung gestartet, um variable Verzögerungen zu vermeiden.

## Beschreibung

Die fortschreitende Digitalisierung in der Industrie wäre ohne moderne Kommunikationstechnologien undenkbar. Gerade bei Anwendungen, bei denen das Verlegen von Kabeln zu aufwändig oder sogar unmöglich wäre, sind drahtlose Lösungen gefragt.

Um den Unternehmen die bestmögliche Infrastruktur für den Austausch von Daten aller Art zu bieten, wurden besondere Industrial Wireless LAN (IWLAN)-Produkte mit speziellen Zusatzfunktionen entwickelt - für die spezifischen Ansprüche von WLAN in der Industrie.

Insbesondere Anwendungen in der Automatisierung, wie z. B. der Automobilherstellung, bei Transport und Logistik, aber auch in der Öl- und Gasindustrie profitieren davon.

Der wesentliche Unterschied zu dem im Privatbereich stark verbreiteten WLAN liegt in der zeitgenauen Übertragung der Steuer- und Datensätze, was für den Einsatz in der Industrie zwingend erforderlich ist, um Maschinen sicher steuern zu können. Außerdem sind solche Geräte für einen größeren Temperaturbereich von -40 °C bis +70 °C ausgelegt.

Das Netz arbeitet mit einem speziellen Verschlüsselungsverfahren, um Manipulationen zu unterbinden.

Drahtlose Kommunikation über Industrial Wireless LAN (IWLAN) ist als Lösung schon in vielen Applikationen im Einsatz, beispielsweise bei mobilen Netzwerkteilnehmern wie fahrerlosen Transportsystemen oder bei Krananwendungen. Nicht nur die Hardware,sondern auch die Software der Geräte muss in der Industrie besondere Anforderungen erfüllen.

Die schnelle und sichere Übertragung der Datenpakete ist ein Muss in der Kommunikation für viele Einsatzfälle, Echtzeitkommunikation nach dem PROFINET und EtherNet/IP Protokoll sollte daher problemlos umsetzbar sein.

Werden Funksysteme, z. B. basierend auf Wi-Fi, in Real-time-Applikationen eigesetzt, ist häufig eine Uhrzeitsynchronisation erforderlich. Die gilt insbesondere dann, wenn das Funksystem in ein Bussystem für Real-time-Anwendungen wie z. B. TSN oder PROFINET integriert ist.

Kommerzielle Wi-Fi-Systeme sind aber nicht optimal für (hoch)genaue Zeitsynchronisation im Bereich von 1 µs und darunter geeignet.

Aktuelle Systeme stellen nur rudimentär Funktionen zur Zeitsynchronisation zur Verfügung.

Die in den zugrunde liegenden Standards IEEE 802.11 und 802.1 spezifizierten Funktionen sind nicht vollständig ausspezifiziert und nur als Hilfestellung zu verstehen.

In aktuellen Implementierungen sind zeitkritische Funktionen daher meist entweder in Hardware realisiert und damit unveränderlich oder als Firmware auf einem Embedded Mikro-Controller.

Weiterhin ist die Dauer des Ablaufs von, mittels Software realisierten, Funktionen nicht genau vorhersagbar bzw. messbar.

Eine genaue Zeitmessung erfordert immer den direkten Zugriff auf in Hardware realisierte Zähler oder Uhren. Ohne diesen entsteht immer ein mehr oder weniger großer Jitter, also die Varianz der Laufzeit der übertragenen Datenpakete.

Derzeit kann nur auf die vom Hersteller bereitgestellten Funktionen zurückgegriffen werden. Allerdings sind die Implementierungen meist nicht offengelegt und damit kaum für Dritte verwendbar.

Derzeit sind in dem beschriebenen technischen Umfeld keine kommerziellen Lösungen für eine hochgenaue Uhrzeitsynchronisation ohne die oben geschilderten Nachteile bekannt. Lösungen basieren auf der Propagierung der Uhrzeit unter Inkaufnahme von größerer Latenz (Verzögerung) und Jitter. Bekannt ist beispielsweise die Realisierung mit dem Network Time Protokoll (NTP, RFC 5905 ...), einen Standard zur Synchronisierung von Uhren in Computersystemen über paketbasierte Kommunikationsnetze. NTP sieht eine Referenzuhr vor, die als Fixpunkt für sämtliche Synchronisierungsprozesse fungiert. Alle Uhren werden also nach dieser Uhr bzw. Uhrzeit ausgerichtet. Es wurde speziell entwickelt, um eine zuverlässige Zeitangabe über Netzwerke mit variabler Paketlaufzeit zu ermöglichen. Das Protokoll ist allerdings aufwändig zu realisieren und weist Sicherheitslücken auf.

Es ist Aufgabe der Erfindung, in dem oben beschriebenen Umfeld der industriellen Drahtloskommunikation ein Kommunikationsverfahren und eine Kommunikationsvorrichtung anzugeben, welches einfach zu realisieren ist.

Es wird ein Verfahren gemäß den Merkmalen des Patentanspruch 1 vorgeschlagen, welches die Aufgabe löst.

Das Verfahren zur Zeitsynchronisation einer Kommunikation zwischen Kommunikationselementen in einem industriellen Umfeld verfügt über eine erste, drahtlose Verbindung für die eigentliche Nutzdatenübertragung, wobei direkt von einer HW-Einheit, die für die Zeitsynchronisation zuständig ist und über eine hochgenaue Uhr verfügt, Synchronisationszeitpunkte initiiert bzw. auf der zu synchronisierenden Seite einer solchen zugeführt werden, wobei die Synchronisationszeitpunkte in Synchronisationssignale umgewandelt werden, wobei zur Übertragung der Synchronisationssignale ein zweiter, vom ersten verschiedener Übertragungskanal genutzt wird, und dieser zweite Übertragungskanal ebenfalls als drahtlose Verbindung ausgeprägt ist.

Weiterhin wird die Aufgabe gelöst durch eine Vorrichtung, welche die Merkmale aufweist gemäß Patentanspruch 11.

Das erfindungsgemäße Kommunikationselement zur Zeitsynchronisation einer Kommunikation in einem industriellen Umfeld, umfasst folgende Elemente:
- ein erstes Verbindungselement zum Aufbau einer ersten drahtlosen Verbindung zur Nutzdatenübertragung,
- ein erstes Element für die Zeitsynchronisation, welches Synchronisationszeitpunkte initiiert bzw. auf der zu synchronisierenden Seite einer solchen zugeführt werden, wobei die Synchronisationszeitpunkte in Synchronisationssignale umgewandelt werden, mit
- einer hochgenauen Uhr, insbesondere einer Echtzeituhr, und
- ein zweites Verbindungselement zur Übertragung der Synchronisationssignale über einen zweiten, vom ersten verschiedener Übertragungskanal, wobei
dieser zweite Übertragungskanal ebenfalls als drahtlose Verbindung ausgeprägt ist.

Erfindungsgemäß wird für die Synchronisation ein zusätzlicher
- idealerweise drahtloser - Kanal genutzt. Dafür kommt in einer vorteilhaften Ausgestaltung der Erfindung ein einfaches Funksystem zum Einsatz.

Als paralleler zweiter Kanal kommen beispielsweise in Frage:
Einfache Systeme, die in den lizenzfreien Frequenzbändern 868 MHz (z. B. auf Basis des CC1100 von Texas Instruments) oder 2,4 GHz z. B. auf Basis des CC2500 von Texas Instruments) arbeiten, d. h. in diesem Band darf nicht dauerhaft gesendet werden aufgrund regulatorischer Anforderungen. Die Sendedauer ist begrenzt, z. B. auf 0,1%, 1% oder 10% der Zeit, bezogen auf 1 Stunde. Dieses Limit stellt aber, wenn nur Impulse (oder gelegentlich kurze Telegramme) gesendet werden, kein Problem dar:
∘ 868 MHz: Bei Impulsen ist der geforderte Duty Cycle kein Problem
∘ 2,4 GHz: bei max. 10 mW kein Duty Cycle, kein LBT gefordert
   - Einfache UWB-Systeme (Ultra-Wideband), z. B. im Frequenzband 3 - 7 GHz
∘ Mit UWB-Systemen lassen sich sehr kurze Impulse erzeugen (Pikosekunden - wenige Nanosekunden), was eine sehr genaue Synchronisation ermöglicht
   - Optische Systeme.

Über dieses werden Synchronisationszeitpunkte in Form einfacher Impulse oder kurzer Telegramme übertragen. Dies ist sowohl zyklisch als auch azyklisch, also insbesondere unregelmäßig möglich.

Im Weiteren wird die Erfindung durch eine Figur erläutert, die auch das bevorzugte Ausführungsbeispiel darstellt.

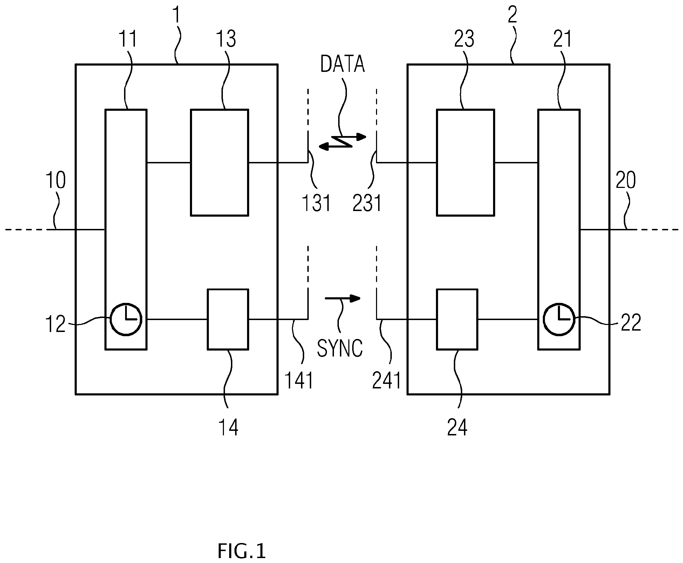

Die Figur zeigt ein erfindungsgemäßes System mit Sender 1 und Empfänger 2. Die Elemente 1 und 2 sind jeweils über einen Datenbus 10, 20 mit weiteren Netzelementen verbunden, die in der Figur nicht dargestellt sind.

Über eine erste drahtlose Verbindung werden die eigentlichen Daten, DATA, übermittelt. Hierfür weisen die Elemente 1, 2, jeweils eine entsprechende Sende- und Empfangseinrichtung 13, 23 mit passender Antenne 131, 231 auf. Diese kommen bzw. gehen zu einer geeigneten Kommunikationsschnittstelle 11, 21. Für die Zeitsynchronisierung wichtig ist die Echtzeituhr 12, 22, welche sowohl bei der Erzeugung der Synchronisationstakte als auch bei der Verarbeitung nach Empfang benötigt werden.

Erfindungsgemäß weisen die Einheiten 1, 2 auch eine zweite drahtlose Übertragungsmöglichkeit für die Signale zur Zeitsynchronisation auf, 14, 24, welche von der ersten, Datenübertragungsmöglichkeit getrennt ist und, wie bereits oben dargestellt, technisch sehr einfach ausgestaltet sein kann. Insbesondere ist es ausreichend, wenn die Übertragung der Zeitsynchonisierungsnachrichten unidirektional erfolgen kann.

Diese Impulse oder Telegramme zur Zeitsynchronisierung werden direkt von einer als Hardware ausgeführten Einheit, die für die Zeitsynchronisation zuständig ist und über eine hochgenaue Uhr 12, 24 verfügt, initiiert bzw. auf der zu synchronisierenden Seite einer solchen zugeführt. Das Funksystem kann sehr einfach und unidirektional ausgeführt sein. Der Sendevorgang wird ohne Verzögerung gestartet, um variable Verzögerungen zu vermeiden.

Die Laufzeit von der Sendevorrichtung (bspw. Antenne) des Initiators zur Empfangsvorrichtung des Empfängers ist damit nur noch die reine Signallaufzeit in den Komponenten und durch die Luft. Sollte eine variable Verzögerung des Sendevorganges (z. B. durch regulatorische Anforderungen wie Listen-before-Talk (LBT)) nicht zu vermeiden sein, kann die obige Hardware-Einheit diese bestimmen und den Wert als Korrekturwert selbst verwenden oder über das eigentliche Funksystem der zu synchronisierenden Seite übermitteln.

Im Wesentlichen parallel zum Synchronisationsimpuls oder - telegramm - kurz davor, gleichzeitig oder auch kurz danach - wird über die erste Kommunikationsverbindung (beispielsweise Wi-Fi) der genaue Zeitpunkt übertragen, an dem das Synchronisationssignal initiiert wurde. Dieser wird in der Zeitmesseinheit des Initiators ermittelt und der Wi-Fi-Komponente übergeben. Damit weiß der Empfänger, welcher Zeit der empfangene Impuls zuzuordnen ist. Der Empfang der Zeit und des Impulses kann dem Sender bestätigt
werden. Dadurch erhält der Sender des Synchronisationssignals eine Empfangsinformation, auch wenn der zweite Übertragungskanal unidirektional ausgeführt ist.

Synchronisationssignale unterschiedlicher Systeme lassen sich auseinanderhalten, indem sie z. B. auf unterschiedlichen Frequenzen und/oder mit unterschiedlichen Kodierungen gesendet werden.

Mit der vorgeschlagenen Lösung wird es ermöglicht, für die eigentliche Datenübertragung eine bewährte und kommerziell verfügbare Funktechnik wie z. B. Wi-Fi oder Bluetooth einzusetzen und trotzdem eine hochgenaue Uhrzeitsynchronisation zu integrieren.

Die hochgenaue Uhrzeitsynchronisation erleichtert der Einsatz von Funksystemen in Real-Time-Ethernet-Systemen wie TSN oder PROFINET.

Die für die Übertragung von Impulsen oder einfachen Telegrammen erforderliche Hardware und Software ist einfach und kostengünstig verfügbar.

## Patentansprüche

1. Verfahren zur Zeitsynchronisation einer Kommunikation zwischen Kommunikationselementen (1, 2) in einem industriellen Umfeld über eine erste, drahtlose Verbindung (DATA), wobei direkt von einer HW-Einheit (11), die für die Zeitsynchronisation zuständig ist und über eine hochgenaue Uhr (12) verfügt, Synchronisationszeitpunkte initiiert bzw. auf der zu synchronisierenden Seite einer solchen zugeführt werden, wobei die Synchronisationszeitpunkte in Synchronisationssignale umgewandelt werden,
zur Übertragung der Synchronisationssignale ein zweiter, vom ersten verschiedener Übertragungskanal (SYNC) genutzt wird, und
dieser zweite Übertragungskanal ebenfalls als drahtlose Verbindung ausgeprägt ist.

2. Verfahren gemäß Patentanspruch 1
**dadurch gekennzeichnet, dass**
der zweite Übertragungskanal (SYNC) als einfaches Funksystem ausgestaltet ist, insbesondere ein Funksystem mit unidirektionaler Funkübertragung.

3. Verfahren gemäß einem der vorherigen Patentansprüche
**dadurch gekennzeichnet, dass**
die Synchronisationssignale in Form einfacher Impulse übertragen werden.

4. Verfahren gemäß einem der vorherigen Patentansprüche 1 oder 2
**dadurch gekennzeichnet, dass**
die Synchronisationssignale in Form kurzer Telegramme übertragen werden.

5. Verfahren nach einem der vorherigen Patentansprüche,
**dadurch gekennzeichnet, dass**
die erste drahtlose Verbindung gemäß dem iWLAN Standard arbeitet.

6. Verfahren gemäß einem der vorherigen Patentansprüche
**dadurch gekennzeichnet, dass**
die Synchronisationssignale zyklisch übertragen werden.

7. Verfahren gemäß einem der vorherigen Patentansprüche 1 bis 5, **dadurch gekennzeichnet, dass**
die Synchronisationssignale azyklisch übertragen werden.

8. Verfahren gemäß einem der vorherigen Patentansprüche
**dadurch gekennzeichnet, dass**
ein Sendevorgang der Synchonisationssignale ohne Verzögerung gestartet wird.

9. Verfahren gemäß einem der vorherigen Patentansprüche
**dadurch gekennzeichnet, dass**
der Sendevorganges eine variable Verzögerung aufweist, und die Hardware-Einheit den Wert der Verzögerung bestimmt und den Wert als Korrekturwert auf das Synchronisationssignal verwendet oder über das erste Funksystem dem empfangenden Kommunikationselement übermittelt.

10. Verfahren gemäß einem der vorherigen Patentansprüche
**dadurch gekennzeichnet, dass**
das Synchronisationssignal eine Information enthält, von welchem Sender dieses Synchronisationssignal gesendet wurde.

11. Kommunikationselement (1, 2) zur Zeitsynchronisation einer Kommunikation in einem industriellen Umfeld, umfassend
- ein erstes Verbindungselement (13, 23) zum Aufbau einer ersten drahtlosen Verbindung zur Nutzdatenübertragung (DATA),
- ein erstes Element (11, 21), für die Zeitsynchronisation, welches Synchronisationszeitpunkte initiiert bzw. auf der zu synchronisierenden Seite einer solchen zugeführt werden, wobei die Synchronisationszeitpunkte in Synchronisationssignale umgewandelt werden, mit
- einer hochgenauen Uhr (12, 22), insbesondere einer Echtzeituhr, und
- ein zweites Verbindungselement (14, 24) zur Übertragung der Synchronisationssignale über einen zweiten, vom ersten verschiedener Übertragungskanal (SYNC), wobei
dieser zweite Übertragungskanal ebenfalls als drahtlose Verbindung ausgeprägt ist.

12. Vorrichtung gemäß Patentanspruch 11
**dadurch gekennzeichnet, dass**
der zweite Übertragungskanal (SYNC) als einfaches Funksystem ausgestaltet ist, insbesondere ein Funksystem mit unidirektionaler Funkübertragung.

13. Vorrichtung gemäß einem der vorherigen Patentansprüche 11 oder 12
**dadurch gekennzeichnet, dass**
die Übertragung der Synchronisationssignale üb den zweiten Übertragungskanal (SYNC) in Form einfacher Impulse erfolgt.

14. Vorrichtung gemäß einem der vorherigen Patentansprüche 11 oder 12
**dadurch gekennzeichnet, dass**
die Übertragung der Synchronisationssignale üb den zweiten Übertragungskanal (SYNC) in Form kurzer Telegramme erfolgt.

15. Vorrichtung nach einem der vorherigen Patentansprüche 11 bis 14,
**dadurch gekennzeichnet, dass**
das erste Verbindungselement (13, 23) für die erste drahtlose Verbindung gemäß dem iWLAN Standard arbeitet.

16. Vorrichtung gemäß einem der vorherigen Patentansprüche 11 bis 15
**dadurch gekennzeichnet, dass**
das zweite Verbindungselement einen Sendevorgang der Synchonisationssignale ohne Verzögerung durchführt.

17. Vorrichtung gemäß einem der vorherigen Patentansprüche 11 bis 15
**dadurch gekennzeichnet, dass**
der Sendevorganges eine variable Verzögerung aufweist, und die Hardware-Einheit den Wert der Verzögerung bestimmt und den Wert als Korrekturwert auf das Synchronisationssignal verwendet oder über das erste Funksystem dem empfangenden Kommunikationselement übermittelt.
